# FASCICULE DE BREVET EUROPEEN

(11) **EP 0 973 457 B1**
(45) Date de publication et mention de la délivrance du brevet: **22.12.2004**
(21) Numéro de dépôt: 98917204.4
(22) Date de dépôt: 23.03.1998
(51) Int. Cl.: A61C 7/06

(54) **SYSTEME DE REGLAGE FIXE OU FLOTTANT DES FRONDES ORTHODONTIQUES**
SYSTEM ZUR FESTEN ODER BEWEGLICHEN EINSTELLUNG ORTHODONTISCHER KINNBINDEN
FIXED OR FLOATING ADJUSTING SYSTEM FOR TEMPORO-MANDIBULAR POSITIONING DEVICE

(30) Priorité: 24.03.1997 FR 9703791
(43) Date de publication de la demande: 26.01.2000
(73) Titulaire: Legallois, Sylvain Henri, 42340 Veauche (FR)
(72) Inventeur: Legallois, Sylvain Henri, 42340 Veauche (FR)
(86) Numéro de dépôt international: PCT/FR1998/000574
(87) Numéro de publication internationale: WO 1998/042272

(56) Documents cités:
- FR-A- 2 413 076
- US-A- 1 976 639
- US-A- 4 815 972
- WESTDEUTSCHE KIEFERKLINIK: "Ein neuer Aktivator zur Behandlung des offenen Bisses" ZAHNÄRZTLICHE RUNDSCHAU, vol. 71, no. 9, 8 septembre 1962, pages 329-330, XP002049523

## Description

La présente invention concerne le dispositif de réglage de la mentonnière des frondes et mini-frondes utilisées dans certains plans de traitement orthodontique

Dans le brevet français 2413076 déposé le 3 janvier 1978, on y décrit un nouvel appareillage d'orthopédie dento-facial pourvu d'un appui frontal comportant deux dispositifs de réception de fixation de tiges métalliques supérieures latérales et d'un appui mentonnier constitué d'une mentonnière comportant également deux dispositifs de réception de fixation de tiges métalliques inférieures latérales réglables par deux pièces d'union caractérisées par deux trous permettant de recevoir les tiges métalliques inférieures et supérieures. Le masque ainsi décrit s'est révélé d'une utilité indiscutable pour exercer certaines tractions sur l'arcade dentaire en cas de nécessité. Cependant dans certains cas il est apparu nécessaire d'exercer une traction sur l'arcade dentaire mandibulaire pour une correction de pathologie clinique différente.

Le but de la présente invention est de fournir un système de réglage d'un nouvel appareil orthopédique dento-facial nommé fronde ou mini-fronde orthodontique, caractérisé en ce qu'il est constitué :
- d'un appui endo-buccal
- d'un appui mentonnier
- d'un arc de fronde et ses ergots mobiles, par l'intermédiaire d'une bague d'arrêt, sur l'axe unique de mentonnière.

Certaines frondes fabriquées à façon à partir d'empreintes du menton ont le désavantage de ne pas posséder de système de réglage et de ce fait de ne pas pouvoir être standardisées. Ce dispositif selon l'invention permet un réglage fixe ou flottant de la mentonnière c'est à dire que la mentonnière (4) et son axe centré unique (5) accompagne le mouvement du menton lors de l'ouverture de la bouche. L'arc de fronde (1) solidarisé à la bague d'arrêt (3) et aux ergots (2) reste en place au niveau de l'arcade dentaire supérieure ou de la commissure labiale. Cependant le système flottant peut être neutralisé et devenir fixe si le vis (8) de la bague d'arrêt (3) de l'arc de fronde (1) est serré. Le système flottant ou fixe se caractérise donc par un arc de fronde (1) et ses ergots (2) solidarisés à une bague d'arrêt (3) et sa vis (8) se déplaçant sur l'axe **unique et centré** (5) de la mentonnière (4). L'axe unique (5) éventuellement cannelé ou percé reçoit des dispositifs d'arrêts de mouvement (6).(ceci selon une liste non limitative pouvant être un joint - torique, goupille, etc...).Les dispositifs d'arrêts étant disposés sur l'axe (5), un en amont de l'ensemble (1/2/3) et un en aval de ce même ensemble de façon à délimiter une plage de déplacement de l'ensemble (1/2/3) sur l'axe unique (5).

Le retour en position initiale de la mentonnière (4) et de son axe (5) du flottant est assuré par un système de rappel (7) (selon une liste non limitative pouvant être un ressort, un ressort lamelle, un élastique, etc...).

L'axe unique (5) pouvant être (selon un dispositif non limitatif et non illustré) désolidarisé de la mentonnière (4) de façon à pouvoir proposer différentes tailles de mentonnières.

Selon une variante non illustrée, un système inverse c'est à dire que l'axe unique (5) serait solidaire de l'axe de fronde ( 1) et ses ergots (2) et que la mentonnière (4) serait solidaire de la bague d'arrêt (3) doit être également retenu.

## Revendications

1. Dispositif de réglage flottant ou fixe des frondes et mini-frondes utilisées dans certains plans de traitements orthodontiques **caractérisé par** un arc de fronde (1) et ses ergots(2) mobiles par rapport à une mentonnière (4) grâce à la bague d'arrêt (3) se déplaçant sur l'axe unique (5) situé entre les deux ergots et la mentonnière. et pouvant être neutralisé par la vis de serrage (8).

2. Dispositif selon la revendication ( **caractérisé en ce que** la bague d'arrêt (3) est fixée sur l'arc de fronde (1) et ses ergots (2), la mentonnière (4) étant solidaire de l'axe (5).

3. Dispositif selon la revendication (1) **caractérisé en ce que** la bague d'arrêt (3) est fixée sur la mentonnière (4), l'arc de fronde (1) et ses ergots (2) étants solidaires de l'axe (5).

4. Dispositif selon l'une quelconque des revendications 1 à 3 **caractérisé en ce que** l'axe (5) est cannelé pour recevoir des dispositifs d'arrêts de mouvement (6) permettant de délimiter une plage de déplacement de la bague (3) sur l'axe (5).

5. Dispositif selon l'une quelconque des revendications 1 à 3 **caractérisé en ce que** l'axe (5) comprend des perçages pour recevoir des goupilles permettant de délimiter une plage de déplacement de la bague (3) sur l'axe (5).

6. Dispositif selon l'une quelconque des revendications précédentes **caractérisé en ce qu'**il comprend un ressort de rappel (7) permettant un retour en position initiale de la bague (3) sur l'axe (5).

7. Dispositif selon la revendication 6 **caractérisé en ce que** le système de rappel en position initiale de la bague (3) sur l'axe (5) pouvant être assuré par quelques formes que ce soit de ressort de rappel (7) ou également par tout autre moyen de rappel en position initiale.

8. Dispositif selon la revendication 6 **caractérisé en ce que** la position initiale de la bague (3) sur l'axe (5) peut-être effectué par des forces type "élastique".

9. Dispositif selon l'une quelconque des revendications précédentes **caractérisé en ce que** l'axe (5) est cintré et peut être également désolidarisé et maintenu par quelque moyen que ce soit de la mentonnière (4).

## Claims

1. Fixed or floating adjusting system for standard or miniature positioning devices in certain planes of orthodontic therapy **characterized by** an arch (1) and its pins (2) capable of moving in relation to a chin cup (4) thanks to a stop ring (3) moving along the sole shaft (5) situated between the two pins and the chin cup which can be locked in a fixed position by means of the tightening screw (8).

2. Device in accordance with the claim (1) **characterized by** the fact that the stop ring (3) is fixed on the arch (1) and its pins (2), the chin cup being integral with the shaft (5).

3. Device in accordance with the claim (1) **characterized by** the fact that the stop ring (3) is fixed on the chin cup (4), the arch (1) and its pins (2) being integral with the shaft (5).

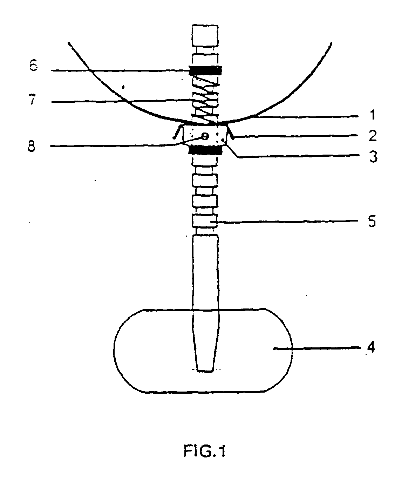

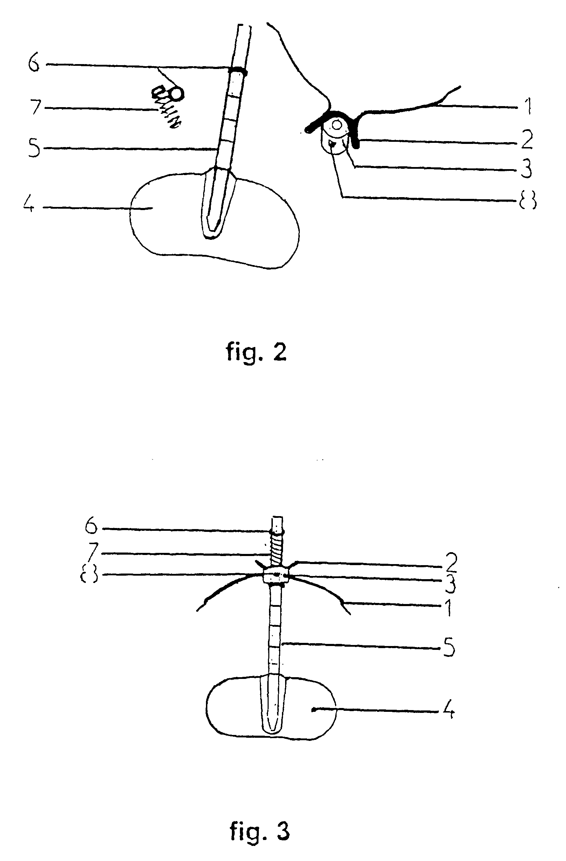

4. Device in accordance with any of the 1 to 3 claims **characterized by** the fact that the shaft (5) is fluted in order to receive the stop means delimiting a range of movement (6) of the ring (3) on the shaft (5) (fig. 1).

5. Device in accordance with any of the 1 to 3 claims **characterized by** the fact that the shaft (5) is pierced in order to receive pins delimiting a range of movement of the ring (3) on the shaft (5).

6. Device in accordance with any of the previous claims **characterized by** the fact that a return spring (7) brings the ring (3) back to the initial position on the shaft (5).

7. Device in accordance with the claim 6 **characterized by** the fact that the return system in the initial position of the ring (3) on the shaft (5) can be ensured by any kind of return spring (7) or by any other means of retum to the initial position.

8. Device in accordance with the claim 6 **characterized by** the fact that the initial position of the ring (3) on the shaft (5) can be executed by several types of forces, for example with an elastic.

9. Device in accordance with any of the previous claims **characterized by** the fact that the shaft (5) is arched and can also be dissociated and maintained by any means of the chin cup (4).

## Patentansprüche

1. Feste oder bewegliche Einstellungsvorrichtung für in bestimmten kieferorthopedischen Behandlungsplänen verwendete Kinn- und Minikinnbinden, **gekennzeichnet durch** einen Bindebogen (1) mit Spornen (2), der im Verhältnis zu einer Kinnstütze (4) beweglich ist dank eines Arretierringes (3), der sich auf einer einzigen Achse (5) zwischen zwei Spornen und der Kinnstütze bewegen lässt, und der **durch** eine Feststellschraube ausser Funktion gesetzt werden kann.

2. Vorrichtung, die sich gemäss Anforderung (1) **dadurch kennzeichnet, dass** der Arretierring auf dem Bindebogen (1) und seinen Spornen (2) befestigt ist, während die Kinnstütze (4) mit der Achse verbunden ist (5).

3. Vorrichtung, die sich gemäss Anforderung (1) **dadurch kennzeichnet, dass** der Arretierring (3) auf der Kinnstütze (4) befestigt ist, während der Bindebogen (1) und seine Sporne (2) mit der Achse verbunden sind (5).

4. Vorrichtung, die sich gemäss der Anforderungen 1 bis 3 **dadurch kennzeichnet, dass** die Achse (5) mit Rillen versehen ist, um Arretiervorrichtungen (6) aufnehmen zu können, die es erlauben, für den Arretierring (3) einen bestimmten Bewegungsspielraum auf der Achse (5) festzulegen.

5. Vorrichtung, die sich gemäss der Anforderungen 1 bis 3 **dadurch kennzeichnet, dass** die Achse (5) mit Bohrungen versehen ist zur Aufnahme von Stiften, um für den Arretierring (3) einen bestimmten Beweguungsspielraum auf der Achse (5) festzulegen.

6. Vorrichtung, die sich gemäss der vorgehenden Anforderungen **dadurch kennzeichnet, dass** sie mit einer Rückführfeder (7) ausgestattet ist, um eine Rückkehr des Arretierringes (3) auf seine Ausgangsposition auf der Achse (5) zu gewährleisten.

7. Vorrichtung, die sich gemäss der Anforderung 6 **dadurch kennzeichnet, dass** das System für die Rückkehr des Arretierringes (3) auf seine Ausgangsposition auf der Achse (5) mit einer beliebigen Art von Rückführfeder (7) oder auch durch beliebige andere Rückführmittel gewährleistet werden kann.

8. Vorrichtung, die sich gemäss der Anforderung 6 **dadurch kennzeichnet, dass** die Ausgangstellung des Arretierringes (3) auf der Achse (5) durch Mittel "elastischer" Art erreicht werden kann.

9. Vorrichtung, die sich gemäss der vorgehenden Anforderungen **dadurch kennzeichnet, dass** die Achse gebogen ist und von der Kinnstütze (4), sei es unabhängig oder mit ihr durch ein beliebiges Mittel verbunden sein kann.
